# EUROPÄISCHE PATENTANMELDUNG

(11) **EP 4 765 898 A1**
(43) Veröffentlichungstag der Anmeldung: **24.06.2026**
(21) Anmeldenummer: 25209133.5
(22) Anmeldetag: 16.10.2025
(51) Int. Cl.: H04W 4/44, H04W 4/90, H04B 7/185, H04W 4/02, H04W 4/029, H04W 76/50

(54) **BETREIBEN EINES KOMMUNIKATIONSSYSTEMS FÜR EIN KRAFTFAHRZEUG**

(30) Priorität: 18.12.2024 DE 102024138626
(71) Anmelder: AUDI Aktiengesellschaft, 85057 Ingolstadt (DE)
(72) Erfinder: Gummer, Alexander, 85049 Ingolstadt (DE)
(74) Vertreter: Hofstetter, Schurack & Partner

(57) **Zusammenfassung**

Die Erfindung betrifft ein Verfahren zum Betreiben eines Kommunikationssystems (10) für ein Kraftfahrzeug (20), wobei das Kraftfahrzeug (20) einen ersten Kommunikationsbereich (23) für eine Datenkommunikation (K) mit einer Kommunikationsvorrichtung (30) bereitstellt. Mittels wenigstens einer Drohne (21) wird autonom eine Positionskarte (P) mit zumindest einer Position in einem Umgebungsbereich des Kraftfahrzeugs (20) ermittelt, an welcher jeweils ein von dem ersten verschiedener zweiter Kommunikationsbereich (24) für das Kraftfahrzeug (20) zur Datenkommunikation (K) mit der Kommunikationsvorrichtung (30) bereitgestellt ist. Mittels der wenigstens einen Drohne (21) wird ein Repositionierungssignal (R) an das Kraftfahrzeug (20) übermittelt wird, wobei das Repositionierungssignal (R) die zumindest eine Position der ermittelten Positionskarte (P) enthält, sodass das Kraftfahrzeug (20) von seiner aktuellen Position auf die zumindest eine Position repositioniert werden kann. Beim Positionieren auf der zumindest einen Position ist das Kraftfahrzeug (20) mit der fahrzeugexternen Kommunikationsvorrichtung (30) für die Datenkommunikation (K) verbunden.

## Beschreibung

Die Erfindung betrifft ein Verfahren zum Betreiben eines Kommunikationssystems für ein Kraftfahrzeug. Die Erfindung betrifft auch ein entsprechendes Kommunikationssystem für ein Kraftfahrzeug.

In der modernen Automobilindustrie spielen vernetzte Fahrzeuge eine zentrale Rolle. Viele Fahrzeugsysteme greifen direkt auf Datenquellen im Internet zu, um aktuelle Informationen wie Verkehrslagen, Wetterbedingungen und Kartendaten in Echtzeit bereitzustellen. Diese Konnektivität ist ein wesentliches Merkmal, das vom Kunden zunehmend erwartet wird. Insbesondere bei höherpreisigen Fahrzeugen, oder solchen die für Abenteuer- oder Offroad-Einsätze konzipiert sind. Hersteller haben in den letzten Jahren beträchtigte Fortschritte bei der Integration von Onboard-Computern, Sensoren und Infotainmentsystemen gemacht, die ständig mit Backendservern kommunizieren. Die Auslagerung komplexer Rechenoperationen in das Backend hat den Vorteil, dass die Rechenkapazität und der Energieverbrauch im Fahrzeug selbst reduziert werden können.

Einige Hersteller haben sogar bereits Systeme entwickelt, die Software-Updates, Ferndiagnosen und sogar fahrzeuginterne Steuerung über das Internet ermöglichen. Die Notwendigkeit einer kontinuierlichen Internetverbindung ist daher in vielen Fahrzeugen unumgänglich. Zudem steigt die Nachfrage nach ständiger Internetverbindung aufgrund des wachsenden Trends zur Digitalisierung und der Integration von Diensten wie Sprachassistenten, Streaming-Diensten und cloudbasierten Anwendungen.

Ein weiteres Merkmal moderner Fahrzeuge ist die zunehmende Integration von Fahrassistenzsystemen und autonomen Fahrfunktionen. Diese Systeme verlassen sich oft auf Echtzeitdaten aus dem Internet, um sicher und effizient zu funktionieren. So wird beispielsweise bei der Navigation im urbanen Raum eine konstante Verbindung benötigt, um Verkehrsströme in Echtzeit zu analysieren und die Routenplanung entsprechend anzupassen. Auch im Offroad-Bereich ist die Konnektivität von Bedeutung, um beispielsweise topografische Daten oder aktuelle Wetterinformationen zu beziehen, die für die sichere Fahrt durch schwieriges Gelände wichtig sind.

Trotz der fortschreitenden Vernetzung und Digitalisierung von Fahrzeugen gibt es signifikante Herausforderungen, insbesondere im Kontext des Offroad-Einsatzes. In abgelegenen Gebieten, wie Gebirgsregionen, Wäldern oder Wüsten ist die Netzabdeckung oft unzureichend. Dies führt zu häufigen Unterbrechungen der Internetverbindung, die wiederum die Funktionalität von Fahrerassistenzsystemen und anderen internetbasierten Diensten beeinträchtigen. Diese Unterbrechungen können nicht nur die Sicherheit gefährden, sondern auch den Komfort und die Zufriedenheit des Fahrers erheblich beeinträchtigen.

Funklöcher, die durch geografische Gegebenheiten wie Täler, Hügel oder dichte Wälder verursacht werden, stellen für Passagiere des Fahrzeugs ein Problem dar. In solchen Situationen ist es für das Fahrzeug nicht möglich, eine stabile Internetverbindung zum Mobilfunkmasten herzustellen. Die Abhängigkeit von einer kontinuierlichen Internetverbindung führt dazu, dass viele Funktionen des Fahrzeugs nicht verfügbar sind, was zu kritischen Situationen wie bei einer Panne oder einem Unfall führen kann, sowie bei längeren stationären Aufhalten, wie beispielsweise beim Campen, zu einem zusätzlichen Problem werden kann.

Ein weiterer Nachteil ist die Unsicherheit, die beim Fahrer entsteht, wenn die Konnektivität verloren geht. Viele Fahrer verlassen sich stark auf die digitalen Systeme ihres Fahrzeugs und fühlen sich im Falle eines Netzverlustes hilflos. Diese Unsicherheit kann sich in stressigen Situationen, wie bei widrigen Wetterbedingungen oder bei der Navigation durch unbekanntes Gelände, verstärken.

Einige Fahrzeughersteller haben begonnen, an der Integration von Drohnen in ihre Fahrzeuge zu arbeiten, um bestimmte Fahrzeugfunktionen zu unterstützen. Die Drohnen sind zum Beispiel darauf ausgelegt, die Umgebung zu erkunden oder Fotos oder Videos aufzunehmen. Es gibt jedoch auch die Idee, eine Drohne als Kommunikationsbrücke zu nutzen und so eine stabile Verbindung zum Beispiel ins Internet zu ermöglichen.

Zum Beispiel offenbart die DE 10 2023 103 604 A1 ein Verfahren zum Betreiben eines Kommunikationssystems in einem Werk. Das Kommunikationssystem umfasst eine basierend auf einer Kommunikationssignal fahrerlos bewegbare Bewegungseinheit und wenigstens eine Kommunikationseinheit, mittels der das Kommunikationssignal in einem Signalbereich bereitgestellt wird. Dabei wird mittels wenigstens einer Drohne das Kommunikationssignal bedarfsweise in einem außerhalb des Signalbereichs liegenden Bewegungsbereich der Bewegungseinheit bereitgestellt.

Die DE 10 2023 126 963 A1 offenbart ein System zur verbesserten Abdeckung einer Satellitenkommunikation durch ein unbemanntes Luftfahrzeug. Dabei ist das System so konfiguriert, dass es Steueranweisungen an das unbemannte Luftfahrzeug überträgt, um eine Positionierung des Luftfahrzeugs in der Luft relativ zum Fahrzeug und zu einem Satelliten zu steuern.

Die DE 10 2015 012 311 A1 offenbart ein Verfahren zum Übermitteln eines Notrufdatensatzes von einem Kraftfahrzeug an ein Funknetz. Dabei wird ein Flugobjekt verwendet, um im Falle eines Notfallereignisses einen Notrufdatensatz von dem Kraftfahrzeug weg zu transportieren und über ein Funknetz den Notrufdatensatz auszusenden.

Es ist die Aufgabe der vorliegenden Erfindung, die Einsatzmöglichkeiten einer Drohne in einem Kommunikationssystem für ein Kraftfahrzeug zu erweitern.

Die Aufgabe wird durch die Gegenstände der unabhängigen Patentansprüche gelöst. Vorteile für die Weiterbildung in der Erfindung sind durch die abhängigen Patentansprüche, die Beschreibung sowie die Figuren offenbart.

Gemäß einem Aspekt betrifft die Erfindung ein Verfahren zum Betreiben eines Kommunikationssystems für ein Kraftfahrzeug. Das Kraftfahrzeug stellt einen ersten Kommunikationsbereich für eine Datenkommunikation mit einer fahrzeugexternen Kommunikationsvorrichtung bereit. Die Kommunikationsvorrichtung befindet sich dabei außerhalb des ersten Kommunikationsbereichs. Bei dem jeweiligen Kommunikationsbereich handelt es sich insbesondere um einen Bereich, in dem das Kraftfahrzeug Daten oder Signale von der Kommunikationsvorrichtung empfangen kann und umgekehrt. Der jeweilige Kommunikationsbereich gibt als die Empfangsreichweite des Kraftfahrzeugs vor. Wenn sich die Kommunikationsvorrichtung also innerhalb des ersten Kommunikationsbereichs befindet, sind die Kommunikationsvorrichtung und das Kraftfahrzeug mittels einer Kommunikationsverbindung zum Signalaustausch miteinander verbunden oder gekoppelt. Befindet sich die Kommunikationsvorrichtung hingegen außerhalb des Bereichs, ist keine Kommunikationsverbindung möglich. Es besteht also keine Verbindung zu einem entsprechenden Funknetzwerk. Das kann zum Beispiel vorkommen, wenn sich das Kraftfahrzeug in einem abgelegenen Gebiet, wie es beispielsweise eingangs beschrieben wurde, befindet.

Um dennoch eine Kommunikationsverbindung zu ermöglichen, wird in der Erfindung wenigstens eine Drohne, also eines oder mehrere unbemannte Luftfahrzeuge oder Flugobjekte, eingesetzt. Mittels der wenigstens einen Drohne wird autonom eine Positionskarte mit zumindest einer Position in einem Umgebungsbereich des Kraftfahrzeugs ermittelt, an welcher jeweils ein von dem ersten verschiedenen zweiter Kommunikationsbereich für das Kraftfahrzeug zur Datenkommunikation mit der fahrzeugexternen Kommunikationsvorrichtung bereitgestellt ist. Die fahrzeugexterne Kommunikationsvorrichtung befindet sich dabei innerhalb des zweiten Kommunikationsbereichs.

Anders ausgedrückt, ermittelt die Drohne den zweiten Kommunikationsbereich für das Kraftfahrzeug. Der zweite Kommunikationsbereich ist dabei so gewählt, dass sich die fahrzeugexterne Kommunikationsvorrichtung innerhalb des Bereichs befindet. Somit ist eine Kommunikationsverbindung zwischen Kraftfahrzeug und Kommunikationsvorrichtung möglich.

Mittels der wenigstens einen Drohne wird nun ein Repositionierungssignal an das Kraftfahrzeug übermittelt. Das Repositionierungssignal enthält dabei die zumindest eine Position der ermittelten Positionskarte, sodass das Kraftfahrzeug von seiner aktuellen Position auf die zumindest eine Position repositioniert oder bewegt werden kann. Beim Positionieren auf der zumindest einen Position ist das Kraftfahrzeug mit der fahrzeugexternen Kommunikationsvorrichtung für die Datenkommunikation verbunden.

Führt das Kraftfahrzeug also den Positionswechsel durch, wird dessen erster Kommunikationsbereich verschoben, und zwar auf den zweiten Kommunikationsbereich. In dem zweiten Kommunikationsbereich sind das Kraftfahrzeug und die Kommunikationsvorrichtung unmittelbar in der Kommunikationsverbindung miteinander verbunden. Die Kommunikationsvorrichtung befindet sich dann in Empfangsreichweite des Kraftfahrzeugs.

Die Drohne kann dem Kraftfahrzeug, insbesondere einem Fahrer des Kraftfahrzeugs, also vorschlagen, einen Positionswechsel durchzuführen, um eine Position mit einem besseren Empfang zur Kommunikationsvorrichtung einzunehmen. Ob der Positionswechsel durchgeführt wird, entscheidet insbesondere der Fahrer. Das heißt, der Fahrer kann das Kraftfahrzeug für die Repositionierung von der aktuellen Position auf die ermittelte Position bewegen oder lenken.

Hierdurch ergibt sich der Vorteil, dass auch in abgelegenen Gebieten eine Verbindung zum Beispiel zum Internet ermöglicht wird. Dies erfüllt die Erwartung von Fahrzeugnutzern nach ständiger Vernetzung und verbessert gleichzeitig die Funktionalität internetbasierter Dienste im Fahrzeug.

Die Datenkommunikation meint vorliegend, insbesondere eine Signalübertragung mittels Funksignalen, beispielsweise mittels Mobilfunk. Dazu können das Kraftfahrzeug, die Kommunikationsvorrichtung und vorzugsweise auch die wenigstens eine Drohne mit einem geeigneten Funkmodul, zum Beispiel mit einer Antenne, ausgestattet sein.

Die fahrzeugexterne Kommunikationsvorrichtung kann zum Beispiel ein Funkmast oder Funkturm oder ein Verbund hiervon sein. Die Kommunikationsvorrichtung kann also ein Funknetzwerk repräsentieren. Mittels der Kommunikationsvorrichtung kann zum Beispiel auf Daten von einem Server, insbesondere einem Backend-Server oder ein Verbund von Rechnernetzwerken zugegriffen werden. Vorzugsweise handelt es sich um einen weltweiten Verbund von Rechnernetzwerken, die allgemein auch als Internet bezeichnet werden.

Die Positionskarte kann insbesondere als dreidimensionale Karte der Umgebung bzw. des untersuchten Umgebungsbereichs des Kraftfahrzeugs verstanden werden. In der Positionskarte kann zum Beispiel neben einer Topografie der Umgebung auch die eine oder die mehreren Positionen mit gutem Empfang für das Kraftfahrzeug zur Kommunikationsvorrichtung angegeben sein.

Zum Ermitteln der Positionskarte wird die Drohne in einem Flugmodus autonom betrieben. Autonom bedeutet hier, dass die Drohne alle erforderlichen Funktionen oder Steuerungsmanöver zum Bewegen in der Luft selbstständig ausführt. Die Drohne führt die Funktionen also automatisch und somit ohne Zutun einer Bedienpersonen, wie beispielsweise dem Nutzer des Kraftfahrzeugs aus. Dadurch wird der Benutzerkomfort erhöht. Der Fahrer muss keine komplizierten Einstellungen vornehmen oder die Drohne manuell steuern. Der Prozess der Signalverstärkung oder Signalerweiterung erfolgt transparent und intuitiv.

Zum Ermitteln der Positionskarte führt die Drohne eine Empfangssuche durch. Dazu fliegt die im Flugmodus durch den Umgebungsbereich und sammelt Umgebungsdaten. Die Umgebungsdaten können zum Beispiel die Topografie der Umgebung sowie Positionen mit gutem Empfang zur Kommunikationsvorrichtung umfassen.

Die jeweilige Position kann in Form von Geokoordinaten im dreidimensionalen Raum angegeben sein. Um Positionen mit gutem Empfang zu detektieren, kann sich die Drohne mit der Kommunikationsvorrichtung in einer Kommunikationsverbindung verbinden, falls die sich in Empfangsreichweite zueinander befinden. Die Drohne misst nun die Signalstärke zur Kommunikationsvorrichtung und bewertet diese. Falls die Signalstärke zum Beispiel einen vorgegebenen Schwellenwert überschreitet, kann der Empfang als entsprechend gut eingestuft werden und die zugeordnete Position als Position in der Positionskarte hinterlegt werden.

Zum Erfassen der Umgebung, insbesondere deren Topografie, kann die Drohne beispielsweise ein Kamerasystem aufweisen. Mit dem Kamerasystem kann die Drohne eine Abbildung der Umgebung erzeugen und nach bekannten Methoden auswerten. Alternativ kann die Drohne die Topografie anhand von GNSS-Signalen (GNSS: Globales Navigationssatellitensystem) empfangen.

Der Umgebungsbereich kann ein Bereich um das Kraftfahrzeug herum sein, in dem die Drohne beim Ermitteln der Positionskarte vorzugsweise noch in Kommunikationsverbindung mit dem Kraftfahrzeug stehen kann. Alternativ ist der Umgebungsbereich zum Beispiel ein Bereich, der einer energetischen Reichweite der Drohne zugeordnet ist oder ihr entspricht. Die Reichweite wird insbesondere durch einen Ladezustand eines Energiespeichers der Drohne bestimmt.

Die Drohne wird vorzugsweise in einer Aufbewahrungseinheit des Kraftfahrzeugs transportiert oder aufbewahrt, wenn sie nicht für das Kommunikationssystem eingesetzt wird. Für das Ermitteln der Positionskarte verlässt die Drohne die Aufbewahrungseinheit, um den Umgebungsbereich zu erfassen. Vorzugsweise kann die Aufbewahrungseinheit eine Ladeschnittstelle und oder eine Wechselstation für einen Energiespeicher der Drohne umfassen.

Das Kraftfahrzeug kann vorzugsweise eine Mensch-Maschine-Schnittstelle (Human-Machine-Interface, HMI) zum Steuern der Drohne bzw. deren Funktionen umfassen. Über das HMI können zum Beispiel Bedienfelder zum Steuern der Drohne vorgesehen sein. Ein Nutzer des Kraftfahrzeugs kann diese Bedienfelder bedienen und dadurch die Drohne steuern. Das Steuern kann zum Beispiel das Starten eines Suchflugs für das Ermitteln der Positionskarte umfassen. Des Weiteren kann der Nutzer zum Beispiel die Repositionierung über das HMI akzeptieren oder ablehnen, sodass die Drohne zum Beispiel zum Kraftfahrzeug zurückkehrt. Natürlich können auch andere Drohnenfunktionen, wie zum Beispiel das Aufnehmen von Videos oder Kamerabildern in der Umgebung oder das Steuern des Drohnenflugs, über die HMI ermöglicht werden.

Zu der Erfindung gehören Ausführungsformen, durch die sich zusätzliche Vorteile ergeben.

In einer Ausführungsform wird überprüft, ob gemäß einem vorbestimmten Notrufkriterium ein Notruf für das Kraftfahrzeug und oder zumindest einen Passagier des Kraftfahrzeugs erforderlich ist. Nur dann, wenn der Notruf erforderlich ist, wird mittels der zumindest einen Drohne ein Notrufsignal des Kraftfahrzeugs an einen Notrufdienst übermittelt. Das Übermitteln erfolgt zum Beispiel mittels der fahrzeugexternen Kommunikationsvorrichtung, die Drohne kann also dazu eingesetzt werden, einen Notruf für das Kraftfahrzeug, das gerade keinen Empfang zu einem Funknetzwerk hat, zu übernehmen.

Durch die Möglichkeit, auch in abgelegenen Gebieten eine Verbindung zum Mobilfunknetz herzustellen, können im Notfall schnell Rettungsdienste kontaktiert oder Pannenhilfen angefordert werden. Dies erhöht die Sicherheit für Fahrer und Insassen, insbesondere in kritischen Situationen.

Um zu ermitteln, ob ein Notruf notwendig ist, können Notrufdaten oder Pannendaten des Kraftfahrzeugs ausgewertet werden. Zum Beispiel kann ein Fahrtüchtigkeitszustand von einem Bordcomputer abgerufen und/oder ein Gesundheitszustand des jeweiligen Passagiers ermittelt werden. Dazu kann zum Beispiel eine entsprechende Gesundheitssensorik zum Messen eines Blutdrucks, eines Pulses und/oder eines Blutzuckerwerts verwendet werden.

Das Notrufkriterium enthält nun Vorgaben oder Informationen dazu, unter welchen Bedingungen die Notrufdaten als Notfall anzusehen sind. Zum Beispiel kann in dem Notrufkriterium ein Grenzwert oder ein Grenzintervall vorgegeben sein. Durch Vergleichen der Notrufdaten mit den hinterlegten Bedingungen kann entschieden werden, ob der Notruf notwendig ist oder nicht. Falls der Notruf notwendig ist, kann das Notrufsignal von dem Kraftfahrzeug zum Beispiel in Form eines Notrufdatenpakets an die Drohne übergeben, also zum Beispiel mittels Kommunikationsverbindung an die Drohne übertragen werden. Die Drohne kann sich mit dem Notrufdatenpaket von dem Kraftfahrzeug wegbewegen und den Notruf absetzen. Dazu braucht die Drohne zum Beispiel nur eine Funkverbindung zu einer beliebigen Kommunikationsvorrichtung aufweisen. Eine Verbindung mit dem Kraftfahrzeug braucht nicht mehr bestehen.

Der Notrufdienst kann zum Beispiel eine Feuerwehr, ein Rettungsdienst oder ein Abschleppdienst oder ein anderer Notrufdienst sein.

In einer Ausführungsform wird nur für den Fall, dass ein Passagier des Kraftfahrzeugs die Repositionierung gemäß dem Repositionierungssignal ablehnt, mittels der zumindest einen Drohne, eine Signalverstärkereinheit an einer in der ermittelten Positionskarte angegebenen Position positioniert. Das heißt, die Drohne transportiert die Signalverstärkereinheit zu der jeweils ermittelten Position und stellt sie dort ab. Es handelt sich vorliegend also um eine mobile Signalverstärkereinheit. Das Kraftfahrzeug wird für die Datenkommunikation in dem zweiten Kommunikationsbereich mit der fahrzeugexternen Kommunikationsvorrichtung über die Signalverstärkereinheit verbunden.

Somit wird also der erste Kommunikationsbereich auf den zweiten Kommunikationsbereich unter Verwendung der Signalverstärkereinheit erweitert. Die Signalverstärkereinheit kann somit als Schnittstelle für die Datenkommunikation zwischen Kraftfahrzeug und Kommunikationsvorrichtung verwendet werden. Sie kann also zur Signalverstärkung eines Kommunikationssignals verwendet werden, welches das Kraftfahrzeug und die Kommunikationsvorrichtung miteinander austauschen möchten. Dazu ist die Signalverstärkereinheit einerseits mit der Kommunikationsvorrichtung und andererseits mit dem Kraftfahrzeug in Kommunikationsverbindung verbunden. Die Datenkommunikation erfolgt somit mittelbar mittels der Signalverstärkereinheit.

Die Signalverstärkereinheit wird in der Kommunikationstechnik auch als Repeater bezeichnet. Die Signalverstärkereinheit kann zum Beispiel ebenfalls in der Aufbewahrungseinheit des Kraftfahrzeugs transportiert werden, wenn sie nicht für die Signalverstärkung verwendet wird.

Das Ablehnen oder Annehmen des Repositionierungssignals kann zum Beispiel durch Eingabe des Passagiers, zum Beispiel über das eingangs genannte HMI erfolgen. Der Passagier kann ein Fahrer oder einem Mitfahrer des Kraftfahrzeugs sein.

In einer Ausführungsform wird nur für den Fall, dass ein Passagier des Kraftfahrzeugs die Positionierung gemäß dem Repositionierungssignal ablehnt, sich zumindest eine Drohne, die eine Signalverstärkereinheit aufweist, an einer in der ermittelten Positionskarte angegebenen Position positioniert. Das Kraftfahrzeug wird nun für die Datenkommunikation in dem zweiten Kommunikationsbereich mit der fahrzeugexternen Kommunikationsverrichtung über diese Signalverstärkereinheit der zumindest einen Drohne verbunden.

Auch hier wird also der erste Kommunikationsbereich, wie zuvor beschrieben, erweitert. Die Drohne wird als Schnittstelle für die Datenkommunikation zwischen Kraftfahrzeug und Kommunikationsvorrichtung verwendet. Die Datenkommunikation oder Signalübertragung erfolgt also mittelbar mittels der zumindest einen Drohne.

Die Drohne als Schnittstelle hat sich insbesondere dann als hilfreich herausgestellt, wenn die ermittelte Position bodenfern ist, also in der Luft liegt. Die Drohne hat nämlich den Vorteil, dass sie sich im Gegensatz zum Kraftfahrzeug und zur Signalverstärkereinheit im dreidimensionalen Raum bewegen kann.

Die jeweilige Drohne kann die Signalverstärkereinheit verbaut haben oder sie kann eine mobile Signalverstärkereinheit, wie sie beispielsweise zuvor beschrieben wurde, transportieren und somit in der Luft an der gewünschten Position halten.

In einer Ausführungsform ist nur für den Fall, dass sich das Kraftfahrzeug in einem Fahrmodus befindet, vorgesehen, dass die zumindest eine Drohne ihre jeweilige Position in Abhängigkeit von einer jeweils aktuellen Position des Kraftfahrzeugs anpasst. Die zumindest eine Drohne nimmt dabei nur solche Positionen ein, die in der Positionskarte ermittelt wurden und an welchen der zweite Kommunikationsbereich bereitgestellt ist.

Die Drohne wird also in einem Folgeflug betrieben. Sie folgt den Fahrzeugbewegungen dynamisch und behält dabei die Kommunikationsverbindung mit dem Kraftfahrzeug und der Kommunikationsvorrichtung bei. Besonders bevorzugt kann die Drohne im Folgeflugmodus die Positionskarte aktualisieren. Wenn das Kraftfahrzeug zum Beispiel während der Fahrt eine Position einnimmt, an der es selbst wieder Empfang hat, wird der Folgeflug vorzugsweise beendet. Die Drohne kehrt dann zum Beispiel zum Kraftfahrzeug zurück und wird in der Aufbewahrungseinheit verstaut.

In einer Ausführungsform umfasst die zumindest eine Drohne eine Datenverarbeitungsvorrichtung mit einem maschinell trainierten Algorithmus. Mittels dem maschinell trainierten Algorithmus wird in Abhängigkeit von erfassten Umgebungsdaten zumindest eine Wahrscheinlichkeitsposition in der Umgebung ermittelt, für welche die Umgebungsdaten gemäß einer vorbestimmten Wahrscheinlichkeit angeben, dass der zweite Kommunikationsbereich bereitgestellt ist. Die zumindest eine Drohne fliegt entsprechend nur die zumindest eine Wahrscheinlichkeitsposition zum Ermitteln der jeweiligen Positionen der Positionskarte an.

An der jeweiligen Wahrscheinlichkeitsposition kann die Drohne den Empfang bzw. die Signalstärke, wie eingangs beschrieben, prüfen. Falls dort ein guter Empfang für das Kraftfahrzeug vorhanden ist, kann die Drohne die Wahrscheinlichkeitsposition als Position der Positionskarte bestätigen. Ansonsten wird die Position verworfen. Insgesamt kann so der Flugpfad für die Drohne optimiert werden. Denn die Drohne braucht nicht willkürlich im Umgebungsbereich herumfliegen, um Positionen mit gutem Empfang zu detektieren. Stattdessen werden gezielt Positionen mit wahrscheinlich gutem Empfang berechnet, die die Drohne dann anfliegt.

Die Wahrscheinlichkeitspositionen ermittelt die Drohne anhand der Wahrscheinlichkeiten, dass an der jeweiligen Position voraussichtlich guter Empfang ist. Dazu untersucht und bewertet die Drohne die erfassten Umgebungsdaten, die wie eingangs beschrieben, zum Beispiel die Topografie der Umgebung enthalten. Dabei kann der Algorithmus zum Beispiel darauf trainiert worden sein, dass zum Beispiel in Tälern schlechterer Empfang herrscht, als in höher gelegenen Gebieten.

Mit einem maschinell trainierten Algorithmus ist insbesondere ein Programm oder eine Funktion gemeint, die als Software und oder direkt als Hardware implementiert ist. Die Datenverarbeitungsvorrichtung speichert dieses Programm, das den maschinell trainierten Algorithmus umfasst oder darstellt oder enthält die entsprechende Hardware. Umgangssprachlich wird ein solcher Algorithmus auch als Künstliche Intelligenz bezeichnet.

In einer Ausführungsform werden mittels der zumindest einen Drohne zum Ermitteln der zumindest einen Position der Positionskarte Erfahrungswerte des Kraftfahrzeugs oder eines Fremdkraftfahrzeugs genutzt. Die Erfahrungswerte enthalten zumindest eine vorbekannte Position in dem Umgebungsbereich, an dem der zweite Kommunikationsbereich bereitgestellt ist.

Das heißt, die Positionskarte, wird zumindest teilweise anhand von bekannten Positionen erstellt. Die Positionen sind aus den Erfahrungswerten für den jeweiligen Umgebungsbereich bekannt. Vorbekannt können die Positionen zum Beispiel dann sein, wenn sich das Kraftfahrzeug oder das Fremdkraftfahrzeug schon einmal in dem Umgebungsbereich befunden haben und mittels deren jeweiliger Drohne schon einmal eine entsprechende Positionskarte erstellt wurde. Das heißt, die Erfahrungswerte können eine bereits erstellte Positionskarte enthalten. Die Erfahrungswerte zu dem jeweiligen Umgebungsbereich können zum Beispiel von einem Backend-Server oder von einem Datenspeicher des Kraftfahrzeugs abgerufen werden.

In einer Ausführungsform ist gemäß einer Variante, für die zumindest eine Drohne im Kraftfahrzeug zumindest ein zweiter Energiespeicher bereitgestellt. In Abhängigkeit von einem Energiespeicherzustand eines aktuell von der Drohne genutzten Energiespeichers bewegt sich die Drohne autonom zum Kraftfahrzeug, um den aktuell von der Drohne genutzten Energiespeicher gegen den zumindest einen zweiten Energiespeicher auszutauschen oder austauschen zu lassen.

Zusätzlich oder alternativ ist in einer weiteren Variante auch für die Signalverstärkereinheit im Kraftfahrzeug zumindest ein zweiter Energiespeicher bereitgestellt. Die zumindest eine Drohne bewegt die Signalverstärkereinheit in Abhängigkeit von einem Energiespeicherzustand des aktuell von der Signalverstärkereinheit genutzten Energiespeichers autonom zum Kraftfahrzeug, um den aktuell von der Signalverstärkereinheit genutzten Energiespeicher gegen den zumindest einen zweiten Energiespeicher auszutauschen.

Zusätzlich oder alternativ ist in einer weiteren Variante vorgesehen, dass im Kraftfahrzeug zumindest eine weitere Signalverstärkereinheit bereitgestellt wird. In Abhängigkeit von einem Energiespeicherzustand eines aktuell von der Signalverstärkereinheit genutzten Energiespeichers bewegt sich die Drohne autonom zum Kraftfahrzeug, um die Signalverstärkereinheit gegen die zumindest eine weitere Signalverstärkereinheit auszutauschen.

Somit kann sichergestellt werden, dass das Kraftfahrzeug möglichst umfangreichen Empfang zur Kommunikationsvorrichtung hat. Die Drohne kann also dafür sorgen, dass bei längerer Standzeit, beispielsweise von mehreren Tagen, der jeweilige Energiespeicher, also zum Beispiel ein Wechselakku oder eine Batterie, gewechselt werden. Dazu überwacht zum Beispiel die Drohne oder das Kraftfahrzeug selbst den Energiespeicherzustand des jeweiligen Energiespeichers. Mit dem Energiespeicherzustand ist insbesondere ein Ladezustand, also die verbleibende Energie des Energiespeichers, für die Stromversorgung der Drohne oder der Signalverstärkereinheit gemeint. Der jeweilige Energiespeicher kann automatisch getauscht werden, zum Beispiel bei einem entsprechenden Mechanismus in der Aufbewahrungseinheit oder er kann von einem Passagier des Kraftfahrzeugs gewechselt werden. Alternativ ist natürlich denkbar, dass die Drohne beziehungsweise die Signalverstärkereinheit zum Laden, zum Kraftfahrzeug zurückkehren oder zurückgebracht werden. Dazu kann eine entsprechende Ladestation in der Aufbewahrungseinheit vorgesehen sein.

In einer Ausführungsform wird mittels der zumindest einen Drohne und oder der jeweiligen Signalverstärkereinheit ein Statussignal an das Kraftfahrzeug zur Anzeige eines aktuellen Betriebsstatus für einen Passagier bereitgestellt. Der Betriebsstatus umfasst dabei einen Energiespeicherzustand eines jeweils aktuell genutzten Energiespeichers der zumindest einen Drohne beziehungsweise der jeweiligen Signalverstärkereinheit und/oder die bisher ermittelte Positionskarte und/oder einen Fortschritt der Drohne beim Ermitteln der Positionskarte.

Das heißt, die Drohne und/oder die Signalverstärkereinheit können Statusmitteilungen an das Kraftfahrzeug senden, sodass ein Passagier den Überblick behalten kann. Das Statussignal kann die Drohne beziehungsweise die Signalverstärkereinheit über die Kommunikationsverbindung zu dem Kraftfahrzeug übermitteln.

Gemäß einem Aspekt betrifft die Erfindung auch ein Kommunikationssystem für ein Kraftfahrzeug. Das Kommunikationssystem umfasst das Kraftfahrzeug, eine fahrzeugexterne Kommunikationseinrichtung und zumindest eine Drohne. Das Kraftfahrzeug weist einen ersten Kommunikationsbereich für eine Datenkommunikation mit der fahrzeugexternen Kommunikationsvorrichtung auf. Die fahrzeugexterne Kommunikationsvorrichtung befindet sich jedoch außerhalb des ersten Kommunikationsbereichs. Das heißt, die Kommunikationsvorrichtung befindet sich außerhalb einer Empfangsreichweite des Kraftfahrzeugs, die durch den ersten Kommunikationsbereich vorgegeben ist.

Die zumindest eine Drohne ist nun dazu ausgebildet, autonom eine Positionskarte mit zumindest einer Position in einem Umgebungsbereich des Kraftfahrzeugs zu ermitteln, an welcher jeweils ein von dem ersten verschiedener zweiter Kommunikationsbereich für das Kraftfahrzeug zur Datenkommunikation mit der fahrzeugexternen Kommunikationsvorrichtung bereitgestellt ist. Die fahrzeugexterne Kommunikationsvorrichtung befindet sich dabei innerhalb des zweiten Kommunikationsbereichs. Das heißt, sie befindet sich innerhalb der Empfangsreichweite des Kraftfahrzeugs für den zweiten Kommunikationsbereich.

Die zumindest eine Drohne ist weiterhin dazu ausgebildet, ein Repositionierungssignal an das Kraftfahrzeug zu übermitteln, wobei das Repositionierungssignal die zumindest eine Position in der ermittelten Positionskarte enthält, sodass das Kraftfahrzeug von seiner aktuellen Position auf die zumindest eine Position repositioniert werden kann. Das Kraftfahrzeug ist dabei beim Positionieren auf der zumindest einen Position mit der fahrzeugexternen Kommunikationsvorrichtung für die Datenkommunikation verbunden.

Mit dem beschriebenen Kommunikationssystem kann somit eine Ausführungsform des erfindungsgemäßen Verfahrens ausgeführt oder durchgeführt werden.

Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Zu der Erfindung gehört auch eine Datenverarbeitungsvorrichtung für die jeweilige Drohne. Die Datenverarbeitungsvorrichtung oder Prozessoreinrichtung (Prozessorschaltung) ist dazu eingerichtet, eine Ausführungsform des erfindungsgemäßen Verfahrens durchzuführen. Die Prozessoreinrichtung kann hierzu zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Als Mikroprozessor kann insbesondere jeweils eine CPU (Central Processing Unit), eine GPU (Graphical Processing Unit) oder eine NPU (Neural Processing Unit) verwendet werden. Des Weiteren kann die Prozessoreinrichtung Programmcode aufweisen, der dazu eingerichtet ist, bei Ausführen durch die Prozessoreinrichtung die Ausführungsform des erfindungsgemäßen Verfahrens durchzuführen. Der Programmcode kann in einem Datenspeicher der Prozessoreinrichtung gespeichert sein. Die Prozessoreinrichtung kann z.B. auf zumindest einer Schaltungsplatine und/oder auf zumindest einem SoC (System on Chip) basieren.

Als eine weitere Lösung umfasst die Erfindung auch ein computerlesbares Speichermedium, umfassend Programmcode, der bei der Ausführung durch einen Computer oder einen Computerverbund diesen veranlasst, eine Ausführungsform des erfindungsgemäßen Verfahrens auszuführen. Das Speichermedium kann zumindest teilweise als ein nicht-flüchtiger Datenspeicher (z.B. als eine Flash-Speicher und/oder als SSD - solid state drive) und/oder zumindest teilweise als ein flüchtiger Datenspeicher (z.B. als ein RAM - random access memory) bereitgestellt sein. Das Speichermedium kann in dem Computer oder Computerverbund angeordnet sein. Das Speichermedium kann aber auch beispielsweise als sogenannter Appstore-Server und/oder Cloud-Server im Internet betrieben sein. Durch den Computer oder Computerverbund kann eine Prozessorschaltung mit beispielsweise zumindest einem Mikroprozessor bereitgestellt sein. Der Programmcode kann als Binärcode und/oder als Assembler-Code und/oder als Quellcode einer Programmiersprache (z.B. C) und/oder als Programmskript (z.B. Python) bereitgestellt sein. Das computerlesbare Speichermedium kann alternativ durch ein Signal mit computerlesbaren Daten realisiert sein, z.B. ein zeitvariantes Spannungssignal und/oder ein Funksignal.

Zu der Erfindung und der Weiterbildung des erfindungsgemäßen Kommunikationssystems die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Kommunikationssystems hier nicht noch einmal beschrieben.

Die Erfindung umfasst auch die Kombinationen der Merkmale der beschriebenen Ausführungsformen. Die Erfindung umfasst also auch Realisierungen, die jeweils eine Kombination der Merkmale mehrerer der beschriebenen Ausführungsformen aufweisen, sofern die Ausführungsformen nicht als sich gegenseitig ausschließend beschrieben wurden.

Im Folgenden sind Ausführungsbeispiele der Erfindung beschrieben. Hierzu zeigt:
- Fig. 1: eine schematische Darstellung eines Kommunikationssystems für eine drohnenbasierte Datenkommunikation zwischen einem Kraftfahrzeug und einer Kommunikationsvorrichtung; und
- Fig. 2: ein schematisches Verfahrensablaufdiagramm für ein Verfahren zum Betreiben eines entsprechenden Kommunikationssystems.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

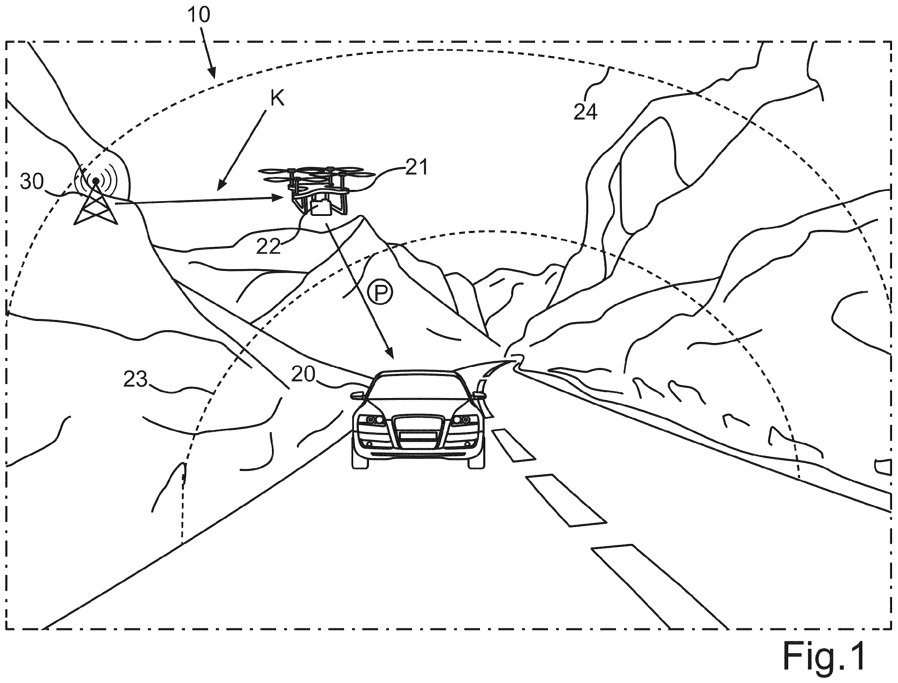

Fig. 1 zeigt in schematischer Darstellung ein Kommunikationssystem 10 für ein Kraftfahrzeug 20. Das Kommunikationssystem 10 umfasst neben dem Kraftfahrzeug 20 eine Drohne 21 und eine Kommunikationsvorrichtung 30.

Die Kommunikationsvorrichtung 30 ist vorliegend durch einen Funkmasten oder Sendeturm, wie er in der Kommunikationstechnik für eine Funkkommunikation eingesetzt wird, repräsentiert. Über den Funkmast kann eine Kommunikationsverbindung mit einem Verbund von Rechnernetzwerken und somit zum Beispiel eine Internetverbindung für das Kraftfahrzeug hergestellt werden. Dazu müsste sich das Kraftfahrzeug 20 in einer Empfangsreichweite der Kommunikationsvorrichtung 30 und umgekehrt befinden.

Die Empfangsreichweite des Kraftfahrzeugs 20 ist vorliegend durch einen ersten Kommunikationsbereich 23 dargestellt. Wie in der Situation in Fig.1 gezeigt, befindet sich das Kraftfahrzeug 20 beispielsweise in abgelegenem Gelände, vorliegend einer Gebirgsregion. Die Kommunikationsvorrichtung 30 liegt somit außerhalb des ersten Kommunikationsbereichs 23. Das Kraftfahrzeug 20 kann also nicht mit dem Internet verbunden werden, was insbesondere bei vernetzten Fahrzeugen eine Herausforderung darstellt. Dadurch kann es nämlich passieren, dass zum Beispiel komplexe Rechenoperationen zum Betreiben des Kraftfahrzeugs, die in einem fahrzeugexternen Backend-Server ausgeführt werden, nicht mehr möglich sind. Auch das Betreiben von Fahrassistenzsystemen oder das Analysieren von Verkehrsströmen in Echtzeit oder das Nutzen anderer internetbasierter Dienste steht somit nicht mehr zur Verfügung.

Im vorliegenden Ausführungsbeispiel soll nun eine Lösung angeboten werden, um im Fall einer fehlenden Internetkonnektivität des Kraftfahrzeugs 20 zu der Kommunikationsvorrichtung 30 dennoch eine Datenkommunikation K zu ermöglichen. Die Datenkommunikation K erfolgt vorzugsweise mittels Funksignalen, wie zum Beispiel Mobilfunksignalen. Dazu können das Kraftfahrzeug 20, die Drohne 21 und die Kommunikationsvorrichtung 30 ein jeweiliges Funkmodul umfassen.

Um die Datenkommunikation K bereitzustellen, wird mittels der mit dem Kraftfahrzeug 20 gekoppelten Drohne 21 über verschiedene Algorithmen nach einer Verbindungsmöglichkeit gesucht und diese dann hergestellt. Mithilfe der Drohne kann somit ein zweiter Kommunikationsbereich 24 für das Kraftfahrzeug 20 realisiert werden, innerhalb welchem sich die Kommunikationsvorrichtung 30 in Empfangsreichweite des Kraftfahrzeugs 20 befindet.

Fig. 1 zeigt ein Ausführungsbeispiel in dem der zweite Kommunikationsbereich 24 im Vergleich zum ersten Kommunikationsbereich 23 erweitert ist. Die Empfangsreichweite des Kraftfahrzeugs 20 ist somit vergrößert. Es gibt aber auch Ausführungsbeispiele in denen der zweite Kommunikationsbereich 24 realisiert wird, indem der erste Kommunikationsbereich 23 verschoben, also an eine andere Position versetzt wird.

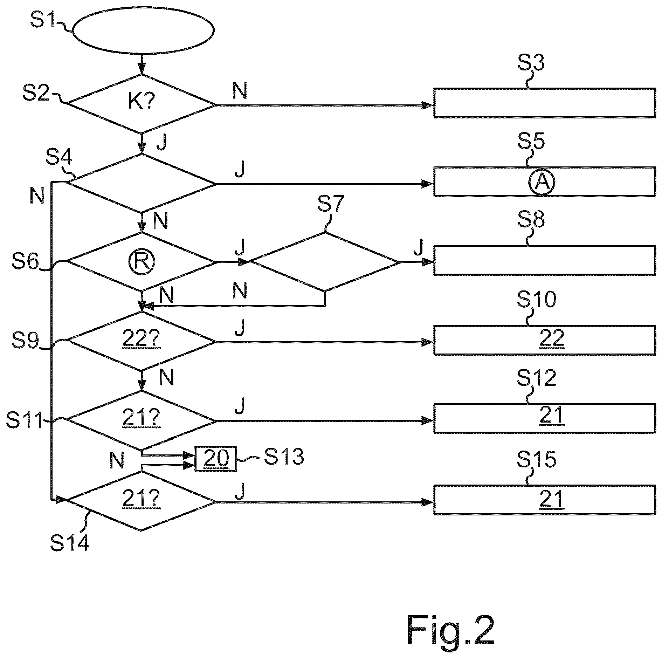

Die verschiedenen Möglichkeiten um drohnenbasiert die Datenkommunikation K zu ermöglichen, sind in Fig.2 näher beschrieben. Fig. 2 zeigt hierzu ein schematisches Verfahrensablaufdiagramm für ein Verfahren zum Betreiben des Kommunikationssystems gemäß Fig. 1

In einem Schritt des S1 des Verfahrens wird zunächst eine Empfangssuche mittels der Drohne 21 durchgeführt. Dazu wird die Drohne auf einen autonomen, vorzugsweise Kl-optimierten Suchflug geschickt, bei dem sie den Internetempfang in der näheren Umgebung des Kraftfahrzeugs 20 untersucht und dreidimensional kartiert. Die Drohne 21 fliegt also im Flugmodus in einem Umgebungsbereich des Kraftfahrzeugs 20 herum und erstellt eine Positionskarte, insbesondere eine dreidimensionale Empfangslandkarte, mit einer oder mehreren Positionen an denen der zweite Kommunikationsbereich 24 für das Kraftfahrzeug 20 bereitgestellt ist. Um den Flugmodus autonom auszufüllen, ist die Drohne 21 bekannterweise mit erforderlichen Kamera- und Sensorsystemen ausgestattet.

Dazu überprüft die Drohne In einem Schritt des S2 insbesondere ob eine Verbindung an der jeweiligen Position zu der Kommunikationsvorrichtung 30 möglich ist. Sie kann dazu zum Beispiel die Signalstärke an der jeweiligen Position messen und auswerten. Ist keine Verbindung möglich (N) wird das Verfahren in einem Schritt S3 fortgesetzt. In dem Schritt S3 sendet die Drohne 21 eine Rückmeldung an einen Fahrer des Kraftfahrzeugs 20, dass keine passende Kommunikationsvorrichtung 30 gefunden wurde Die Rückmeldung kann in einem Kraftfahrzeug zum Beispiel mittels einer Mensch-Maschine-Schnittstelle (HMI), beispielsweise über ein Display oder einen Bildschirm ausgegeben werden

Ist gemäß Schritt S2 hingegen eine Verbindung möglich (J) wird das Verfahren in einem Schritt S4 fortgesetzt In dem Schritt S4 wird überprüft, ob ein Notruf für einen Passagier des Kraftfahrzeugs oder das Kraftfahrzeug selbst erforderlich ist Das ist zum Beispiel der Fall, wenn das Kraftfahrzeug 20 verunfallt ist oder ein Passagier gesundheitlich auf sofortige Hilfe angewiesen ist. Falls das Kraftfahrzeug 20 oder eine entsprechende Notfallsensorik des Kraftfahrzeugs 20 erkennt, dass es ein Notruf erforderlich ist (J), wird das Verfahren in einem Schritt S5 fortgesetzt

In dem Schritt S5 wird mittels der Drohne 21 ein Notruf abgesetzt. Dazu kann sie sich mit einem Notrufmodul des Kraftfahrzeugs 20 vernetzen und von diesem ein Notrufdatenpaket aufnehmen oder empfangen. Dann kann sich die Drohne 21 von dem Kraftfahrzeug 20 wegbewegen und zwar an eine Position, die zum Beispiel aus der Positionskarte bekannt ist, an der eine Internetverbindung besteht. Anschließend kann die Drohne 21 mittels der Kommunikationsvorrichtung 30 ein Notrufsignal A mit dem Notrufdatenpaket an einen Notrufdienst, wie beispielsweise eine Feuerwehr, eine Sanitätsdienst oder einen Abschleppdienst übermitteln. Sofern die Drohne 21 sich noch in Empfangsreichweite des Kraftfahrzeugs 20 befindet, kann die Drohne 21 zum Beispiel als Verbindungsschnittstelle zwischen der Kommunikationsvorrichtung 30 und dem Kraftfahrzeug 20 auch eine Sprachverbindung zu dem jeweiligen Passagier des Kraftfahrzeugs und dem Notrufdienst herstellen.

Stellt sich in Schritt S4 hingegen raus, dass kein Notruf erforderlich ist (N), wird das Verfahren in einem Schritt S6 fortgesetzt In dem Schritt S6 überprüft zum Beispiel die Drohne, ob an der ermittelnden Position der Positionskarte eine Repositionierung für das Kraftfahrzeug 20 möglich ist Dazu kann die Drohne 21 zum Beispiel die bekannte Topografie beim Erkunden der Umgebung nutzen. Das heißt, wenn die Drohne 21 Internetempfang an einer mit dem Fahrzeug erreichbaren Stelle detektiert, schlägt sie eine Repositionierung des Kraftfahrzeugs 20 vor. Dazu kann die Drohne 21 ein Repositionierungssignal R, das die jeweilige Position enthält, an das Kraftfahrzeug 20 senden. Die Position kann dem Fahrer des Kraftfahrzeugs 20 zum Beispiel über den Bildschirm der HMI angezeigt werden. Falls die Repositionierung möglich ist, wird das Verfahren in einem Schritt S7 fortgesetzt.

In dem Schritt S7 wird überprüft, ob die Repositionierung von dem Fahrer akzeptiert wird. Dazu kann dem Fahrer über den Bildschirm zum Beispiel ein Bedienfeld zur Auswahl angezeigt werden über das der Fahrer mittels Eingabe die neue Position akzeptieren oder ablehnen kann. Akzeptiert der Fahrer die Repositionierung (J) wird das Verfahren in einem Schritt S8 fortgesetzt.

In dem Schritt S8 kann der Fahrer das Kraftfahrzeug 20 repositionieren, also von seiner aktuellen Position auf die ermittelte Position bewegen oder umparken. Der Fahrer kann so durch das Umparken über konventionelle Methoden, also unmittelbar eine Internetverbindung mit der Kommunikationsvorrichtung 30 herstellen. Durch das Umparken wird also der erste Kommunikationsbereich 23 so verschoben, dass sich die Kommunikationsvorrichtung 30 innerhalb der Empfangsreichweite des Kraftfahrzeugs 20, die durch an der neuen Position durch den zweiten Kommunikationsbereich 24 angegeben ist, befindet. Dieses Vorgehen eignet sich insbesondere für stationäre Anwendungsfälle, wie beispielsweise beim Campen.

Akzeptiert der Fahrer hingegen die Repositionierung nicht oder ist keine Repositionierung möglich, weil beispielsweise die Position von dem Kraftfahrzeug 20 nicht erreicht werden kann, wird das Verfahren in einem Schritt S9 fortgesetzt. In dem Schritt S9 wird überprüft, ob eine Signalverstärkung mittels eines Repeaters, also einer Signalverstärkereinheit 22 möglich ist. Dazu überprüft die Drohne 21 zum Beispiel anhand der aus der Positionskarte bekannten Topographie der Umgebung, ob die Position sich an einer für den Repeater erreichbaren Stelle befindet. Falls die ermittelte Position diese Anforderung erfüllt (J) wird das Verfahren in einem Schritt S10 fortgesetzt.

In dem Schritt S10 platziert die Drohne 21 die Signalverstärkereinheit 22 so in der Umgebung, also an der ermittelten Position, dass das Signal von der Stelle mit Empfang zum Kraftfahrzeug 20 weitergeleitet werden kann. So kann eine stationäre Verbindungslösung geschaffen werden.

Mittels des Repeaters wird also der erste Kommunikationsbereich 23 auf den zweiten Kommunikationsbereich erweitert oder vergrößert. Die Datenkommunikation K zwischen Kommunikationsvorrichtung 30 und Kraftfahrzeug 20 erfolgt mittelbar mittels der Signalverstärkereinheit 22. Um das Aussetzen an einer Stelle mit ausreichendem Empfang zu ermöglichen, ist die Signalverstärkereinheit 22 vorzugsweise mobil und akkubetrieben. Die begrenzte Nutzungsdauer der Signalverstärkereinheit 22 ist aufgrund des geringen Stromverbrauchs der Funktion zum Erweitern des Kommunikationsbereichs (insbesondere kleiner als 15 Watt) nicht relevant. Bei längerer Standzeit, zum Beispiel von mehreren Tagen, kann die Batterie, also ein Energiespeicher der Signalverstärkereinheit, zum Beispiel mittels der Drohne gewechselt oder der Repeater kann zum Laden von der Drohne eingeholt oder gegen einen weiteren Repeater getauscht werden. Stellt sich in Schritt S9 hingegen heraus, dass die ermittelte Position für die Signalverstärkereinheit 22 nicht zugänglich ist (N) wird das Verfahren in einem Schritt S11 fortgesetzt

In dem Schritt S11 überprüft die Drohne 21, ob eine Signalverstärkung mittels der Drohne 21 selbst möglich ist Dazu überprüft die Drohne durch Messen der Signalstärke, ob beispielsweise bodenferne Positionen, also Positionen in der Luft mit ausreichend Empfang zur Verfügung stehen. Falls die Drohne 21 eine oder mehrere entsprechende Positionen findet (J), wird das Verfahren in einem Schritt S12 fortgesetzt

In dem Schritt S12 erfolgt die Signalverstärkung mittels der Drohne vorzugsweise stationär. Dazu weist die Drohne 21 ebenfalls eine Signalverstärkereinheit 22 auf und bewegt sich an die ermittelte Position, um dort stationär in der Luft zu verharren, um die Verbindung zwischen Kommunikationsrichtung 30 und Kraftfahrzeug 20 herzustellen. Auch hier wird also der erste Kommunikationsbereich 23 auf den zweiten Kommunikationsbereich 24 erweitert oder vergrößert und zwar mittels der Drohne 21 selbst. Die Datenkommunikation K erfolgt also mittels der Drohne 21. Die Signalverstärkereinheit 22 kann integraler Bestandteil der Drohne 21 sein oder die Drohne 21 kann die mobile Signalverstärkereinheit 22 in der Luft halten und transportieren

Um der begrenzten Flugzeug der Drohne, die in der Regel ca. 25 bis 30 Minuten beträgt, zu begegnen, kann im Kraftfahrzeug 21 ein zweiter Energiespeicher, also ein Wechselakku, vorgehalten sein Dieser kann vorzugsweise automatisiert und schnell am Kraftfahrzeug 20 gegen den entladenen ausgetauscht werden.

Alternativ zu der stationären Signalverstärkung mittels der Drohne 21 ist auch eine dynamische Signalverstärkung mittels der Drohne 21 denkbar. Dazu wird in einem Schritt S14 überprüft, ob eine dynamische Signalverstärkung mittels der Drohne 21 erfordert ist. Das ist zum Beispiel der Fall, wenn das Kraftfahrzeug 20 nicht stationär an einer Position steht, sondern sich beispielweise entlang einer Passstraße durchs Gebirge bewegt. Dazu kann das Kraftfahrzeug 20 der Drohne 21 zum Beispiel mitteilen, dass es sich fortbewegt und somit eine dynamische Signalverstärkung notwendig ist. Vorzugsweise wird der Schritt S14 parallel oder als Alternative zum Schritt S6 durchgeführt Wird in Schritt S14 eine dynamische Signalverstärkung für notwendig erachtet, wird das Verfahren in einem Schritt S15 fortgesetzt.

In dem Schritt S15 erfolgt die Signalverstärkung mittels der Drohne 21 dynamisch, also bei fahrendem Kraftfahrzeug 20. Die Drohne 21 folgt dabei dem Kraftfahrzeug im Flugmodus autonom und passt ihre Geschwindigkeit und Flugbahn zum Beispiel Kl-optimiert so an die des Kraftfahrzeugs 20 an, dass stets die bestmögliche Internetverbindung gewährleistet wird. Durch diese Art der Verbindungsherstellung können auch bei der Fahrt Assistenzsysteme genutzt werden, welche beispielsweise eine Konnektivität erfordern. Um die bestmögliche Internetverbindung zu gewährleisten, bewegt sich die Drohne 21 beispielsweise entlang der Positionen, die sie gemäß der Positionskarte beim Suchflug ermittelt hat. Vorzugsweise kann die Drohne 21 die Positionskarte im Flug aktualisieren, sodass dauerhaft eine Internetverbindung für das Kraftfahrzeug 20 besteht.

Stellt sich in den Schritten S11 oder S14 heraus, dass eine Signalverstärkung mittels der Drohne 21 nicht möglich ist (N), wird das Verfahren in einem Schritt S13 fortgesetzt. Das ist zum Beispiel der Fall, wenn die Drohne 21 bei der Empfangssuche keine Verbindung zur Kommunikationsvorrichtung 30 herstellen kann

In dem Schritt S13 wird die Empfangssuche mittels der Drohne 21 abgebrochen und die Drohne 21 kehrt vorzugsweise zum Kraftfahrzeug 20 zurück. Bei Nichtbenutzung wird die Drohne vorzugsweise in einem Aufbewahrungsfach oder einer Aufbewahrungseinheit im Kraftfahrzeug 20 verstau, um vor Schmutz und Witterung geschützt zu sein. In dem Fach ist vorzugsweise eine Akkulade- und Wechselstation für die Drohne und beispielsweise auch für die Signalverstärkereinheit 22 vorgesehen, so dass auch eine längere Nutzungsdauer mit minimaler Unterbrechung realisiert werden kann.

Um die begrenzte Flugzeit der Drohne 21 pro Akkuladung maximal effizient zu nutzen muss die Drohne stets die beste Flugroute ermitteln. Dies gilt sowohl für die autonome Empfangssuche als auch zum Beispiel für die Verfolgung des Kraftfahrzeugs 20 bei der Herstellung der dynamischen Internetverbindung. Um dies zu erreichen, wird die Flugbahn KI-basiert optimiert. Dazu wird auf eine künstliche Intelligenz (KI) zurückgegriffen. Diese kann auf Basis der erkannten Umgebung und hinterlegten Topographie in der Positionskarte mögliche Positionen mit gutem Empfang auf Basis von gelernten Wahrscheinlichkeiten ermitteln. So wird die Empfangssuche beschleunigt und insbesondere für das Absetzen des Notrufs wertvolle Zeit eingespart.

Die künstliche Intelligenz kann zum Beispiel als Datenverarbeitungsvorrichtung mit einem maschinell trainierten Algorithmus realisiert sein, mittels welchen in Abhängigkeit von erfassten Umgebungsdaten eine oder mehrere Wahrscheinlichkeitspositionen in dem Umgebungsbereich ermittelt werden. Für die Wahrscheinlichkeitspositionen geben die Umgebungsdaten gemäß einer vorbestimmten Wahrscheinlichkeit an, dass der zweite Kommunikationsbereich 24 bereitgestellt ist. Für die Empfangssuche fliegt die Drohne 21 nun die ermittelnden Wahrscheinlichkeitspositionen zum Ermitteln der Position(en) der Positionskarte an.

Um mit dem Kraftfahrzeug 20 zu kommunizieren, ist die Drohne 21 vorzugsweise mit der Softwarearchitektur des Kraftfahrzeugs 20 vernetzt. Darüber kann ein Passagier des Kraftfahrzeugs 20 zum Beispiel einzelne Funktionen, wie den Suchflug oder den Folgeflug initiieren oder steuern. Gleichzeitig kann somit über die Kommunikationsverbindung zwischen Drohne 21 und dem Kraftfahrzeug 20 Rückmeldung über den Status der Drohne, insbesondere den Status der Empfangssuche, den Akku-Zustand bzw. die verbleibende Flugdauer und den Zustand der Positionskarte, zum Beispiel über den Bildschirm an den Passagier ausgegeben oder dargestellt werden.

Insgesamt zeigen die Ausführungsbeispiele eines Drohnensystems zur Herstellung einer Internetverbindung in Funklöchern und abgelegenem Gelände.

## Patentansprüche

1. Verfahren zum Betreiben eines Kommunikationssystems (10) für ein Kraftfahrzeug (20), wobei das Kraftfahrzeug (20) einen ersten Kommunikationsbereich (23) für eine Datenkommunikation (K) mit einer fahrzeugexternen Kommunikationsvorrichtung (30) bereitstellt, welche sich außerhalb des ersten Kommunikationsbereichs (23) des Kraftfahrzeugs (20) befindet, wobei
- mittels wenigstens einer Drohne (21) autonom eine Positionskarte (P) mit zumindest einer Position in einem Umgebungsbereich des Kraftfahrzeugs (20) ermittelt wird, an welcher jeweils ein von dem ersten verschiedener zweiter Kommunikationsbereich (24) für das Kraftfahrzeug (20) zur Datenkommunikation (K) mit der fahrzeugexternen Kommunikationsvorrichtung (30) bereitgestellt ist, wobei sich die fahrzeugexterne Kommunikationsvorrichtung (30) innerhalb des zweiten Kommunikationsbereichs (24) befindet, und
- mittels der wenigstens einen Drohne (21) ein Repositionierungssignal (R) an das Kraftfahrzeug (20) übermittelt wird, wobei das Repositionierungssignal (R) die zumindest eine Position der ermittelten Positionskarte (P) enthält, sodass das Kraftfahrzeug (20) von seiner aktuellen Position auf die zumindest eine Position repositioniert werden kann, wobei das Kraftfahrzeug (20) beim Positionieren auf der zumindest einen Position mit der fahrzeugexternen Kommunikationsvorrichtung (30) für die Datenkommunikation (K) verbunden ist.

2. Verfahren nach einem der vorhergehenden Ansprüche, wobei, überprüft wird, ob gemäß einem vorbestimmten Notrufkriterium ein Notruf für das Kraftfahrzeug (20) und/oder zumindest einen Passagier erforderlich ist, und nur dann wenn der Notruf erforderlich ist, mittels der zumindest einen Drohne (21) ein Notrufsignal (A) des Kraftfahrzeugs (20) an einen Notrufdienst übermittelt wird.

3. Verfahren nach einem der vorhergehenden Ansprüche, wobei nur für den Fall, dass ein Passagier des Kraftfahrzeugs (20) die Repositionierung gemäß dem Repositionierungssignal (R) ablehnt, mittels der zumindest einen Drohne (21) eine Signalverstärkereinheit (22) an einer in der ermittelten Positionskarte (P) angegebenen Position positioniert wird, und das Kraftfahrzeug (20) für die Datenkommunikation (K) in dem zweiten Kommunikationsbereich (24) mit der fahrzeugexternen Kommunikationsvorrichtung (30) über die Signalverstärkereinheit (22) verbunden wird.

4. Verfahren nach einem der vorhergehenden Ansprüche, wobei nur für den Fall, dass ein Passagier des Kraftfahrzeugs (20) die Repositionierung gemäß dem Repositionierungssignal (R) ablehnt, sich die zumindest eine Drohne (21), die eine Signalverstärkereinheit (22) aufweist, an einer in der ermittelten Positionskarte (P) angegebenen Position positioniert, und das Kraftfahrzeug (20) für die Datenkommunikation (K) in dem zweiten Kommunikationsbereich (24) mit der fahrzeugexternen Kommunikationsvorrichtung (30) über die Signalverstärkereinheit (22) der zumindest einen Drohne (21) verbunden wird.

5. Verfahren nach Anspruch 4, wobei nur für den Fall, dass das Kraftfahrzeug (20) sich in einem Fahrmodus befindet, die zumindest eine Drohne (21) ihre jeweilige Position in Abhängigkeit von einer jeweils aktuellen Position des Kraftfahrzeugs (20) anpasst, wobei die zumindest eine Drohne (21) nur solche Positionen einnimmt, die in der Positionskarte (P) ermittelt wurden und an welchen der zweite Kommunikationsbereich (24) bereitgestellt ist.

6. Verfahren nach einem der vorhergehenden Ansprüche, wobei die zumindest eine Drohne (21) eine Datenverarbeitungsvorrichtung mit einem maschinell trainierten Algorithmus umfasst, wobei mittels dem maschinell trainierten Algorithmus in Abhängigkeit von erfassten Umgebungsdaten zumindest eine Wahrscheinlichkeitsposition in dem Umgebungsbereich ermittelt wird, für welche die Umgebungsdaten gemäß einer vorbestimmten Wahrscheinlichkeit angeben, dass der zweite Kommunikationsbereich (24) bereitgestellt ist und die zumindest eine Drohne (21) nur die zumindest eine Wahrscheinlichkeitsposition zum Ermitteln der Positionskarte (P) anfliegt.

7. Verfahren nach einem der vorhergehenden Ansprüche, wobei die zumindest eine Drohne (21) zum Ermitteln der zumindest einen Position der Positionskarte (P) Erfahrungswerte des Kraftfahrzeugs (20) oder eines Fremdkraftfahrzeugs nutzt, wobei die Erfahrungswerte zumindest eine vorbekannte Position in dem Umgebungsbereich enthalten, an der der zweite Kommunikationsbereich (24) bereitgestellt ist.

8. Verfahren nach einem der vorhergehenden Ansprüche, wobei für die zumindest eine Drohne (21) im Kraftfahrzeug (20) zumindest ein zweiter Energiespeicher bereitgestellt wird, und sich die zumindest eine Drohe (21) in Abhängigkeit von einem Energiespeicherzustand eines aktuell von der Drohne (21) genutzten Energiespeichers autonom zum Kraftfahrzeug (20) bewegt, um den aktuell von der Drohne (21) genutzten Energiespeicher gegen den zumindest einen zweiten Energiespeicher auszutauschen, und/oder für die Signalverstärkereinheit (22) im Kraftfahrzeug (20) zumindest ein zweiter Energiespeicher und/oder zumindest eine weitere Signalverstärkereinheit bereitgestellt wird, und die zumindest eine Drohe (21) in Abhängigkeit von einem Energiespeicherzustand eines aktuell von der Signalverstärkereinheit (22) genutzten Energiespeichers autonom die Signalverstärkereinheit (22) zum Kraftfahrzeug (20) bewegt, um den aktuell von der Signalverstärkereinheit (22) genutzten Energiespeicher gegen den zumindest einen zweiten Energiespeicher auszutauschen oder die zumindest eine die zumindest eine Drohe (21) in Abhängigkeit von einem Energiespeicherzustand eines aktuell von der Signalverstärkereinheit (22) genutzten Energiespeichers autonom die Signalverstärkereinheit (22) gegen die zumindest eine weitere Signalverstärkereinheit austauscht .

9. Verfahren nach einem der vorhergehenden Ansprüche, wobei die zumindest eine Drohne (21) und/oder die jeweilige Signalverstärkereinheit (22) ein Statussignal an das Kraftfahrzeug (20) zur Anzeige eines aktuellen Betriebsstatus für einen Passagier bereitstellt, wobei der Betriebsstatus einen Energiespeicherzustand eines jeweils aktuell genutzten Energiespeichers der zumindest einen Drohne (21) oder der jeweiligen Signalverstärkereinheit (22) und/oder die ermittelte Positionskarte (P) und/oder einen Fortschritt der Drohne beim Ermitteln der Positionskarte (P) umfasst.

10. Kommunikationssystem (10) für ein Kraftfahrzeug (20), umfassend das Kraftfahrzeug (20), eine fahrzeugexterne Kommunikationseinrichtung (30) und zumindest eine Drohne (21), wobei das Kraftfahrzeug (20) einen ersten Kommunikationsbereich (23) für eine Datenkommunikation (K) mit der fahrzeugexternen Kommunikationsvorrichtung (30) aufweist, wobei sich die fahrzeugexterne Kommunikationsvorrichtung (30) außerhalb des ersten Kommunikationsbereichs (23) befindet, und
- die zumindest eine Drohne (21) dazu ausgebildet ist, autonom eine Positionskarte (P) mit zumindest einer Position in einem Umgebungsbereich des Kraftfahrzeugs (20) zu ermitteln, an welcher jeweils ein von dem ersten verschiedener zweiter Kommunikationsbereich (24) für das Kraftfahrzeug (20) zur Datenkommunikation (K) mit der fahrzeugexternen Kommunikationsvorrichtung (30) bereitgestellt ist, wobei sich die fahrzeugexterne Kommunikationsvorrichtung (30) innerhalb des zweiten Kommunikationsbereichs (24) befindet, und
- die zumindest eine Drohne (21) dazu ausgebildet ist, ein Repositionierungssignal (R) an das Kraftfahrzeug (20) zu übermitteln, wobei das Repositionierungssignal (R) die zumindest eine Position der ermittelten Positionskarte (P) enthält, sodass das Kraftfahrzeug (20) von seiner aktuellen Position auf die zumindest eine Position repositioniert werden kann, wobei das Kraftfahrzeug (20) beim Positionieren auf der zumindest einen Position mit der fahrzeugexternen Kommunikationsvorrichtung (30) für die Datenkommunikation (K) verbunden ist.
